Europäisches Patentamt

European Patent Office

Office européen des brevets

(19)

(11) Numéro de publication: **0 053 982**

**A1**

(12) **DEMANDE DE BREVET EUROPEEN**

(21) Numéro de dépôt: **81401939.4**

(22) Date de dépôt: **04.12.81**

(51) Int. Cl.³: **G 05 D 11/13**
**C 02 F 3/00**

(30) Priorité: **04.12.80 FR 8025794**

(43) Date de publication de la demande:
**16.06.82 Bulletin 82/24**

(84) Etats contractants désignés:
**BE DE GB IT NL SE**

(71) Demandeur: **Queltier, Patrice**
**42, rue Gutenberg**
**F-44100 Nantes(FR)**

(72) Inventeur: **Queltier, Patrice**
**42, rue Gutenberg**
**F-44100 Nantes(FR)**

(74) Mandataire: **Phélip, Bruno et al,**
**c/o Cabinet Harlé & Phélip 21, rue de La Rochefoucauld**
**F-75009 Paris(FR)**

(54) Appareil pour le pilotage d'installations et son application au traitement d'eaux usées.

(57) Appareil permettant d'assurer le pilotage selon un mode cyclique d'un processus ou d'un apport d'adjuvants en fonction d'un volume d'entrée de matière dans des installations automatisées.

Il comprend fondamentalement des dispositifs de codage (1, 7) (avec décodages (5, 17) et affichages (6, 17) éventuels), ainsi que de génération d'impulsions (8), de comptage (11), de décomptage (12), d'imputation de temps effectif de fonctionnement (10), et de commande (14).

EP 0 053 982 A1

Croydon Printing Company Ltd.

## Appareil pour le pilotage d'installations et son application au traitement d'eaux usées.

La présente invention concerne le pilotage selon un mode cyclique d'un processus ou d'un apport d'adjuvants en fonction d'un volume d'entrée de matière détecté dans des installations automatisées, telles que par exemple les installations de traitement des eaux usées par le procédé dit à boues activées.

L'invention concerne plus particulièrement un appareil permettant l'amélioration du fonctionnement d'un processus ou d'un apport d'adjuvants et reposant sur la prise en compte automatique et cyclique d'un volume d'entrée de matière dans l'installation concernée, pour réaliser un système à automatisme à séquences auto-adaptatif.

Pour simplifier l'exposé, l'invention est décrite ci-après en référence plus particulièrement à une installation de traitement des eaux usées par le procédé dit à boues activées dans laquelle elle trouve effectivement sa place et pour laquelle elle a été conçue en premier lieu; il est bien clair cependant que l'invention n'est pas limitée à cette application précise, mais qu'elle s'applique aussi bien à tous autres processus qu'ils soient biologiques ou purement chimiques, dans lesquels un volume d'entrée de matière (liquide, gazeuse, pulvérulente, etc.) peut constituer un paramètre utile pour l'optimalisation du fonctionnement de l'installation.

Les installations ou les unités d'épuration biologique des eaux usées par boues activées comprennent un bassin d'aération et, en aval de celui-ci, un bassin de décantation et un réacteur de réactivation. On injecte de l'oxygène de l'air dans le bassin d'aération afin d'assurer la croissance d'une culture bactérienne aérobie, en pratique à l'aide de différents moyens électromécaniques tels que des turbines;

DA.

des brosses ou des surpresseurs.Les besoins en oxygène de ces boues s'expriment en kg $O_2$/kg $DBO_5$/jour et sont très inégalement répartis sur une durée de 24 heures.

Des études récentes,faites en particulier par les agences de bassin,montrent qu'en France,les équipements de dépollution des eaux ne couvrent actuellement qu'environ 60% des besoins.

D'autre part,la très large majorité de ces besoins (75%)concerne des stations d'épuration d'importance moyenne (1000-5000EH).

Or, comme on l'a indiqué plus haut,la fourniture d'oxygène doit être,sur ce type de stations,directement proportionnelle à une demande variable.

Il convient d'obtenir et de maintenir un rapport de proportionnalité convenable,afin d'éviter:

-soit une sous-oxygénation,qui permet certes une moindre dépense énergétique,mais procure un mauvais rendement biologique et un rejet de mauvaise qualité,

-soit une sur-oxygénation,qui induit une forte consommation énergétique et risque de conduire à un rendement biologique négatif.

Actuellement,pour résoudre ce problème,deux solutions sont en général employées (étant entendu que la plupart des systèmes d'aération ont un pouvoir d'oxygénation fixe):

a)Utilisation d'un doseur électromécanique commandant directement la mise en marche et l'arrêt de l'aérateur de manière cyclique;dans certains cas, ce système est amélioré par l'adjonction d'une horloge et de plusieurs doseurs permettant de réduire l'écart entre la demande et la fourniture en fonction des heures de pointe.

Dans la pratique,il est le plus utilisé,mais les réglages restent délicats et son prix devient vite prohibitif lorsqu'il s'agit d'affiner ses possibilités.

b)Utilisation d'un oxymètre,couplé lui aussi directement à l'aérateur. Ce système serait techniquement intéressant si la sonde de mesure ne posait pas de problèmes de fiabilité. Cette solution ne peut être utilisée que sur des stations importantes, suivies en quasi-permanence par un personnel qualifié.

Il existe même d'autres systèmes plus sophistiqués,qui visent à traiter plusieurs paramètres,mais qui grèvent considérablement le coût des installations et les frais de fonctionnement de celles-ci.

C'est ainsi que la DE-OS 27 52 863 concerne le dosage de petites quantités de liquides pollués et fait intervenir,à cette fin,un mélange de deux fluides. L'objectif poursuivi est la réalisation d'un système de dosage de polluants dans de petites quantités de liquides pollués qui circulent en permanence. Les moyens préconisés ne font intervenir qu'un système fixé,c'est-à-dire un système qui est tout l'opposé d'un système auto-adaptatif comme celui qui fait l'objet de la présente invention. Dans un tel système figé,l'asservissement n'est que le complément indispensable du système. De plus il n'y a aucun affichage de sortie,ni aucune interactivité possible sur le dispositif décrit dans ce document.

Dans l'article paru dans Brown Boveri Review volume 63,n°10,Octobre 1976,sont décrits,plus particulièrement aux pages 648 et 649,des systèmes de régulation d'installations de traitement d'eaux usées.

Le système alors décrit (page 649)qui aurait pu se rapprocher le plus de ce qui est présentement revendiqué vise en fait un réglage du stade biologique dans le but d'assurer les conditions les plus favorables à l'activité des microorganismes.L'étude repose sur la respirométrie (besoins en $O_2$)des boues;mais la variation des besoins du floc biologique est lente et il n'est donc pas envisagé,du fait même que cela n'a aucune utilité,un système à réponse rapide. Il s'attache à procurer une adaptation à la demande de l'effluent et se situe donc en amont du bassin d'aération. Le problème étant de maintenir dans le bassin d'aération un taux constant d'oxygène par litre,il est préconisé pour ce faire une sonde oxymétrique,ainsi qu'un ajout d'un turbidimètre placé dans le bassin secondaire.

Enfin la DE-OS 24 27 550 décrit un procédé pour traiter des liquides par un gaz,en particulier pour clarifier des eaux usées,dans lequel on recycle le mélange d'eau et de boue à clarifier et on aère par introduction d'oxygène dans ce mélange;on effectue séparément l'une de l'autre la recirculation et l'aération,et on effectue la recirculation de préférence en continu et par contre l'aération sous forme intermittante. Le dispositif préconisé comprend un aérateur sous forme de pont-brosse rotatif et peut présenter,dans des variantes de réalisation,deux zones distinctes,qui sont une zone de décantation et une zone d'aération. Rien de ce que pouvait décrire ce document n'anticipait de la présente invention ou ne pouvait rendre celle-ci évidente,puisque les objectifs respectivement visés ne correspondent pas entre eux.

5

Tous ces systèmes n'apportent pas de solution fiable au pilotage des aérateurs des petites et moyen nes stations.

Il y avait donc manifestement un besoin,tant pour l'équipement d'unités futures que pour le renouvellement du parc des installations actuelles de traitement des eaux usées,pour un système de pilotage d'un coût réduit et simple à mettre en oeuvre, donc implantable aussi bien dans les grandes que dans les moyennes et même les petites stations d'épuration d'effluents liquides:.

En considérant que les besoins en oxygène sont créés en majorité par l'arrivée dans la station d'effluents pollués et que la quantité totale de pollution est,au moins en première approximation,proportionnelle au volume d'effluent,on a maintenant conçu et mis au point un appareillage assurant,à partir d'une simple mesure de niveaux ou de débits, le pilotage des aérateurs d'une installation de traitement d'eaux usées par boues activées et susceptible de s'intégrer dans toute station d'épuration existante ou à venir sans représenter un surcoût prohibitif ,d'autant que cet appareillage simplifie et optimalise le fonctionnement de l'installation.

L'invention a donc pour objet un appareil tel que défini dans les revendications ci-annexées. Cet appareil permet d'assurer le pilotage selon un mode cyclique d'un processus ou d'un apport d'adjuvants en fonction d'un volume d'entrée de matière dans des installations automatisées;il constitue un système à automatisme à séquences auto-adaptatif et comprend fondamentalement:

-un dispositif de codage permettant l'enregistrement d'une durée de cycle choisie à convenance,

0053982

6

-un dispositif de codage permettant l'enregistrement d'un temps limite (minimum ou maximum) de fonctionnement en l'absence d'entrée de matière,

-un dispositif de génération d'impulsions connecté aux organes assurant l'entrée de matière dans l'installation,

-un compteur,relié à une base de temps et au dispositif de codage de durée de cycle (avec comparateur intermédiaire)et comportant un organe de remise à zéro automatique commandée par le comparateur,

-un dispositif assurant l'imputation sur chaque cycle du temps minimum codé au moyen du dispositif susdit,ainsi que le comptage du temps effectif de fonctionnement (d'un processus ou d'un apport d'adjuvants)résultant de la somme des impulsions reçues et devant être pris en compte dans le cycle en cours ou dans le cycle suivant,et le décomptage du temps de fonctionnement susdit quand celui-ci est effectif, avec liaison à la même base de temps que celle ci-dessus,

-un dispositif assurant la commande temporisée du processus ou de l'apport d'adjuvants en fonction des informations reçues des dispositifs respectivement de comptage de durée de cycle et de décomptage, par exemple tel que la fin du cycle de comptage déclenche la marche et que la fin du cycle de décomptage déclenche l'arrêt ou vice versa),avec interposition d'un comparateur zéro relié au dispositif de décomptage susdit,ainsi que,éventuellement,

-des dispositifs de décodage et d'affichage respectivement de la durée de cycle et du temps de fonctionnement effectif par cycle pris en compte par les dispositifs de codage susdits.

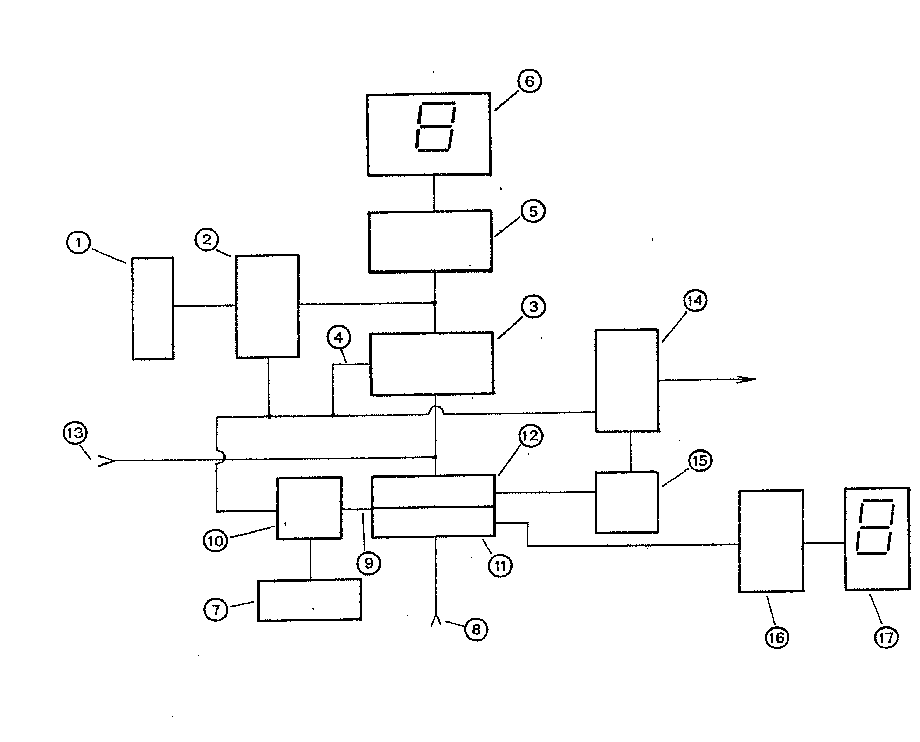

Un exemple de schéma synoptique illustrant sommairement la structure logique d'un tel appareil est donné dans la figure unique annexée. L'appareil schématisé sur cette figure est un appareil électronique qui comprend fondamentalement les éléments fonctionnels suivants,regroupés pour plus de clarté par unités fonctionnelles:

-un dispositif de codage 1 pour l'enregistrement d'une durée de cycle choisie;un comparateur 2, un compteur 3,muni d'une remise à zéro 4 et relié à un décodeur 5 et à un afficheur tel qu'un afficheur sept segments 6;

-un dispositif de codage 7 permettant l'enregistrement d'un temps limite de fonctionnement;un dispositif de génération d'impulsions 8 commandé par les organes assurant l'entrée de matière dans l'installation;un dispositif 9 assurant l'imputation 10 sur chaque cycle du temps limite codé au moyen du dispositif 7,ainsi que le comptage 11 du temps effectif de fonctionnement à prendre en compte,et le décomptage 12 du temps de fonctionnement susdit,

-une base de temps 13 pour le compteur 3 et le dispositif de décomptage 12;

-un dispositif 14 pour la commande temporisée du processus ou de l'apport d'adjuvants,avec interposition d'un comparateur zéro 15;et un dispositif de décodage 16 et d'affichage,tel qu'un afficheur sept segments,17.

Dans la pratique,en ce qui concerne plus spécifiquement une installation de traitement d'eaux usées par boues activées prise ici à titre d'exemple illustratif,l'appareil selon l'invention trouve sa place en relation avec les organes amont et aval qui sont essentiellement et respectivement:

-un système électronique de mesure de volumes de liquide,

-des dispositifs électromécaniques de commande d'organes de transfert dudit liquide,et

-des dispositifs électromécaniques de commande des aérateurs.

Ces organes,eux-mêmes classiques,et l'appareil selon l'invention,constituent un système permettant d'assurer effectivement le pilotage des aérateurs en fonction du volume d'effluent traité à chaque instant,et pouvant donc résoudre les problèmes actuellement posés dans de telles installations.

Dans la pratique,la charge hydraulique supportée par les stations d'épuration varie en effet constamment,et cela principalement pour deux raisons
1)imperfection des réseaux d'égout, due à:

    a) des branchements parasites de gouttières sur le réseau des eaux usées,

    b)des tassements de terrains,entraînant une mauvaise étanchéité des réseaux et un drainage des nappes phréatiques,

2)utilisation discontinue de l'eau claire dans l'industrie et chez les particuliers.

Il en résulte des variations de débit très importantes sur les stations d'épuration en fonction:

    -des conditions météorologiques (temps sec ou pluie)

    -de l'heure de la journée (diurne ou nocturne) et/ou du jour de la semaine.

Il faut également noter au passage que la concentration de la pollution peut varier suivant les mêmes critères.

Selon une variante de l'appareil conforme à l'invention,celui-ci peut donc être "sensibilisé" aussi à cet autre paramètre qu'est la concentration de la pollution,par le biais d'un conductimètre ou d'un pH mètre,par exemple.

L'appareil tel que décrit plus haut peut être réalisé au moyen de composants et/ou d'organes classiques,que l'homme de l'art est à même de choisir à convenance parmi ceux dont il dispose,ou qui sont disponibles dans le commerce,et qui sont reconnus comme aptes à remplir les fonctions ainsi clairement définies. Il est bien certain que la réalisation de cet appareil n'est pas limitée à des composants précis.

L'acquisition des données d'entrée aurait pu théoriquement faire appel à des débitmètres comme il en existe sur le marché; les débitmètres existants sont relativement fiables et permettraient une mesure précise et continue,mais leur emploi ne peut être retenu dans la mise en oeuvre de l'invention,pour les raisons suivantes:

-ils représentent un coût trop élevé pour l'importance d'au moins une large fraction des installations auxquelles cet appareillage s'applique;

leur mise en place s'avérerait difficile,voire impossible,sur les installations existantes.

Au lieu de cela,on a trouvé que,le fonctionnement de l'appareillage selon l'invention ne nécessitant pas une mesure très fine,on peut procéder à l'acquisition des données d'entrée selon deux principes simples,qui tirent profit de la présence dans les stations d'épuration d'un poste de relèvement des eaux usées,associé à un bassin ou bâche primaire dans lequel le niveau de l'effluent liquide fait déjà l'objet d'un contrôle:

-mesure par "cuvée":les postes de relèvement d'eaux usées sont équipés de "poires de niveaux",qui commandent électriquement la marche
(poire haute)et l'arrêt (poire basse)des pompes
assurant le transfert des eaux usées vers le bassin
d'aération. Le positionnement des poires étant fixe
dans la bâche de pompage,le volume pompé entre ces
deux niveaux est toujours le même et représente une
"cuvée",soit par exemple 1000 dm$^3$.Il suffit donc
que l'appareil assure le comptage du nombre de
cuvées dans un temps donné pour en déduire un volume
total ou un débit horaire.

Il faut cependant noter que cette solution ne
tient pas compte du volume d'eaux usées entrant dans
la station pendant le pompage de la "cuvée" et
nécessite donc d'assortir les valeurs obtenues d'un
facteur de correction approprié.

-mesure du temps de pompage:le débit horaire
des pompes (ou autres organes de transfert de matière)étant pratiquement fixe,on obtient le volume
d'eaux usées entrant dans le bassin d'aération en
mesurant la durée de fonctionnement des pompes et en
la multipliant par le débit horaire connu.

Les dispositifs électromécaniques de commande
des organes de transfert du liquide sont des dispositifs connus,tels que par exemple des discontacteurs électriques ou des relais. Quant aux organes
de transfert de matière,ce sont en pratique,lorsqu'il
s'agit de liquides,des pompes ou des aéro-éjecteurs.

Le système logique représenté par l'appareil
selon l'invention constitue un servomécanisme à
logique interne faisant intervenir la mesure
d'un volume de liquide au moyen d'un dispositif
capteur dont la sortie,après amplification éventuelle,est traitée par cet appareil,qui agit à son tour, selon un mode cyclique,sur ses organes de sortie, dont la fonction consiste à attaquer directement le système à commander.

L'appareil à automatisme à séquences auto-adaptatif (ou optimalisant)qu'on a ainsi réalisé permet de réduire considérablement,voire de supprimer en fonctionnement normal,l'intervention humaine, sous sa forme manuelle comme sous sa forme intellectuelle. Il assure lui-même la programmation de points de consigne pour les organes de pilotage concernés et des boucles calculées dans ledit appareil, comme on le montrera plus loin sur un exemple. La modification des paramètres de fonctionnement est donnée par une fonction logique des conditions de l'instant et elle s'insère dans un cycle de fonctionnement de base,qui repose sur le fait qu'il faut en tout état de cause maintenir un état de fonctionnement minimum,même en l'absence d'entrée de matière, dans les installations dans lesquelles l'appareil selon 'l'invention trouve son application. Dans le cas des stations d'épuration d'eaux usées par boues activées,il s'agit d'assurer une aération minimale pour entretenir le floc biologique du bassin d'aération.

L'appareillage selon l'invention constitue un système dont le coût est réduit et qui présente le double avantage d'être simple à mettre en oeuvre et d'intéresser aussi bien des installations déjà existantes que de nouvelles.

Sa conception permet une réalisation industrielle en série et une présentation dans des coffrets de dimensions et de complexité variables suivant l'importance des stations d'épuration concernées et le degré de sophistication qu'on veut leur donner.

L'invention est décrite plus concrètement ci-après en référence à un exemple illustratif qui ne la limite aucunement.

Dans le cas concret considéré on a tout d'abord défini les besoins en oxygène d'une station donnée de traitement d'eaux usées par boues activées.

Des mesures sur le terrain ont montré par exemple qu'en milieu rural la demande biochimique en oxygène pour un effluent du type concerné se situait entre 300 et 400 mg $O_2/dm^3$.

Cette valeur rapportée au volume journalier entrant dans la station d'épuration, donne une demande journalière en $O_2$ de, par exemple, 40 kg $O_2/d$.

La plupart des aérateurs ont un pouvoir d'oxygénation fixe. Dans le cas présent, celui-ci était de 8 kg $O_2/h$.

L'aérateur devrait donc théoriquement fonctionner, par jour, pendant une durée de:

$$\frac{\text{demande journalière}}{\text{pouvoir oxygénant}} = \frac{40}{8} = 5 \text{ heures.}$$

Comme on l'a déjà indiqué, même en l'absence d'arrivée d'effluent, une aération minimale est nécessaire et doit être assurée pour entretenir le floc biologique du bassin d'aération.

Dans un système de fonctionnement classique, correspondant à la pratique actuelle, on répartissait de la manière suivante les 5 heures de fonctionnement total journalier:l'expérience ayant montré que, pour diverses raisons, des cycles de 30 minutes convenaient mieux, on effectuait une répartition sur 24 heures des 5 heures de fonctionnement selon un cycle de 6,25 minutes de fonctionnement toutes les 30 minutes au moyen d'horloges cycliques. Ce mode de fonctionnement comportait manifestement des lacunes importantes,car il ajustait la fourniture d'oxygène,non pas à la demande,mais en fonction d'un critère de temps uniquement. Il était certes possible
pour limiter cette imperfection,d'obtenir avec des
horloges complémentaires des cycles différents,pour
distinguer des périodes que l'on sait différentes
(par exemple jour-nuit et/ou jours ouvrables-fin
de semaine). Mais,malgré cela,le système restait
délicat d'emploi et son prix devenait prohibitif
lorsqu'on envisageait d'affiner ses possibilités.

Selon l'invention,par contre,si l'on retient
également,à titre d'exemple,un cycle d'aération
de 30 minutes,et qu'on fixe un temps de fonctionnement minimum,par exemple de 5 minutes,le cycle de
base en l'absence d'arrivée d'effluent se trouve
par conséquent être de 5 minutes de marche pour
25 minutes d'arrêt.

Chaque minute de fonctionnement de pompe,
représente une demande en $O_2$ que l'on considère
comme fixe et qui,compte tenu des valeurs posées
plus haut,vaut:

$$1000 \text{ dm}^3 \times 400 \text{ mg } O_2/\text{dm}^3 = 0,4 \text{ kg } O_2.$$

L'aérateur pouvant,comme indiqué plus haut,
fournir 8 kg $O_2$/h,chaque minute de pompage représente donc:

$$8 \text{ kg/h} = 133 \text{ g/min}$$

d'où : $\dfrac{\text{besoin}}{\text{fourniture}} = \dfrac{400}{133} = 3 \text{ min de fonctionne-}$

ment d'aérateur.

Ainsi donc,avec un appareil selon l'invention
agencé pour créditer le cycle initial de 3 minutes
de fonctionnement d'aérateur à chaque pompage,on
obtient un cycle de fonctionnement auto-modulable
procurant une fourniture d'oxygène en rapport direct
avec la demande.

14

## REVENDICATIONS

1. Appareil permettant d'assurer le pilotage selon un mode cyclique d'un processus ou d'un apport d'adjuvants en fonction d'un volume d'entrée de matière dans des installations automatisées, caractérisé en ce qu'il constitue un système à automatisme à séquences auto-adaptif et qu'il comprend fondamentalement:

-un dispositif de codage permettant l'enregistrement d'une durée de cycle choisie à convenance,

-un dispositif de codage permettant l'enregistrement d'un temps limite de fonctionnement, en l'absence d'entrée de matière,

-un dispositif de génération d'impulsions connecté aux organes assurant l'entrée de matière dans l'installation,

-un compteur,relié à une base de temps et au dispositif de codage de durée de cycle ( avec comparateur intermédiaire)et comportant un organe de remise à zéro automatique commandée par le comparateur,

-un dispositif assurant l'imputation sur chaque cycle du temps minimum codé au moyen du dispositif susdit,ainsi que le comptage du temps effectif de fonctionnement(d'un processus ou d'un apport d'adjuvants)résultant de la somme des impulsions reçues et devant être pris en compte dans le cycle en cours ou dans le cycle suivant,et le décomptage du temps de fonctionnement susdit quand celui-ci est effectif, avec liaison à la même base de temps que celle ci-dessus,

-un dispositif assurant la commande temporisée du processus ou de l'apport d'adjuvants en fonction des informations reçues des dispositifs respectivement de comptage de durée de cycle et de décomptage, avec interposition d'un comparateur zéro relié au dispositif de décomptage susdit,ainsi que,éventuellement,

-des dispositifs de décodage et d'affichage respectivement de la durée de cycle et du temps de fonctionnement effectif par cycle pris en compte par les dispositifs de codage susdits.

2.Appareil selon la revendication 1,caractérisé en ce qu'il est constitué par un appareil électronique comprenant fondamentalement les éléments fonctionnels suivants:

-un dispositif de codage (1) pour l'enregistrement d'une durée de cycle choisie;un comparateur (2), un compteur (3),muni d'une remise à zéro (4) et relié à un décodeur (5) et à un afficheur (6);

-un dispositif de codage (7)permettant l'enregistrement d'un temps limite de fonctionnement, un dispositif de génération d'impulsions (8) commandé par les organes assurant l'entrée de matière dans l'installation;un dispositif (9)assurant l'imputation (10)sur chaque cycle du temps limite codé au moyen du dispositif (7),ainsi que le comptage (11) du temps effectif de fonctionnement à prendre en compte et le décomptage (12)du temps de fonctionnement susdit;

-une base de temps (13)pour le compteur (3) et le dispositif de décomptage (12);

-un dispositif (14) pour la commande temporisée du processus ou de l'apport d'adjuvants,avec interposition d'un comparateur zéro(15);et un dispositif de décodage (16)et d'affichage (17).

3. Application de l'appareil selon l'une des revendications 1 ou 2 au pilotage d'installations de traitement d'eaux usées par boues activées, caractérisée en ce qu'elle comprend la mise en oeuvre de cet appareil en relation avec des organes amont et aval qui sont essentiellement:

-un système électronique de mesure de volumes de liquide,

-des dispositifs électromécaniques de commande d'organes de transfert dudit liquide,et

-des dispositifs électromécaniques de commande des aérateurs.

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| A | US - A - 3 529 246 (G. KAPS et al)<br><br>* colonne 1, lignes 23 à 34; colonne 2, ligne 46 à colonne 3, ligne 48; figure 1 * | 1,2 |
| | -- | |
| A | DE - A - 2 752 863 (HOECHST)<br><br>* page 3, lignes 1 à 27; page 5, ligne 27 à page 7, ligne 20; figure 1 * | 1,2 |
| | -- | |
| A | BROWN BOVERI REVIEW, volume 63, no. 10, octobre 1976<br>BADEN (DE)<br>J. LENSCHOW "Process control and data processing in sewage treatment plants", pages 643 à 650<br><br>* pages 648 et 649, paragraphe "Control of the biological stage" et figure 11 * | 3 |
| | -- | |
| A | DE - A - 2 427 550 (MENZEL & CO.)<br><br>* page 4, ligne 5 à page 5, ligne 25; figures 1,2 * | 3 |

**CLASSEMENT DE LA DEMANDE (Int. Cl. 3)**

G 05 D 11/13
C 02 F 3/00

**DOMAINES TECHNIQUES RECHERCHES (Int. Cl. 3)**

G 05 D 11/00
21/00
C 02 F 3/00
B 01 J 4/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-03-1982 | POINT |